# EUROPEAN PATENT APPLICATION

(11) **EP 4 407 907 A1**
(43) Date of publication of application: **31.07.2024**
(21) Application number: 22871761.7
(22) Date of filing: 29.08.2022
(51) Int. Cl.: H04L 1/16

(54) **DYNAMIC DATA TRANSMISSION METHOD AND APPARATUS, AND STORAGE MEDIUM**

(30) Priority: 24.09.2021 CN 202111124350
(71) Applicant: Datang Mobile Communications Equipment Co., Ltd., Beijing 100085 (CN)
(72) Inventor: LUO, Chen, Beijing 100085 (CN); WANG, Jiaqing, Beijing 100085 (CN); YANG, Meiying, Beijing 100085 (CN); ZHANG, Yinghao, Beijing 100085 (CN)
(74) Representative: dompatent von Kreisler Selting Werner - Partnerschaft von Patent- und Rechtsanwälten mbB
(86) International application number: PCT/CN2022/115515
(87) International publication number: WO 2023/045709

(57) **Abstract**

Embodiments of the present disclosure provide a dynamic data transmission method and apparatus, and a storage medium. The method comprises: receiving first information carried by MAC layer information borne by a first PDSCH resource, the first information being used for instructing a terminal to receive corresponding PDSCH data by means of a second PDSCH resource; and receiving corresponding PDSCH data by means of the second PDSCH resource on the basis of the first information. According to the dynamic data transmission method and apparatus and the storage medium provided in the embodiments of the present disclosure, the first information is carried by the MAC layer information borne by the first PDSCH resource for instructing the terminal to receive the corresponding PDSCH data in the second PDSCH resource, thereby implementing dynamic data transmission without scheduling DCI, and reducing a transmission delay.

## Description

### CROSS-REFERENCE TO RELATED APPLICATION

The present application claims priority to Chinese patent application No. 202111124350.5 filed on September 24, 2021, entitled "Dynamic Data Transmission Method and Apparatus, and Storage Medium", which is hereby incorporated by reference in its entirety.

### FIELD

The present application relates to the field of communication, and in particular to dynamic data transmission methods and apparatuses, and a storage medium.

### BACKGROUND

With the continuous development and improvement of the 5th generation mobile communication (5G) technology, services and scenarios with low-latency and high-bandwidth for consumers have become current focuses. An extended reality (XR) service is one of them.

It is conducive to the periodicity of semi-persistent scheduling (SPS) because of quasiperiodic features of the XR service. On one hand, data may be transmitted on a pre-configured periodic physical downlink shared channel (PDSCH) without monitoring scheduling signaling. On the other hand, PDSCH transmission may be performed in SPS scheduling during a discontinuous reception off (DRX-off) period. Therefore, SPS scheduling in the related art may be applied to XR service transmission.

However, XR service transmission using a traditional SPS scheduling has a problem of large transmission delay.

### SUMMARY

Embodiments of the present application provide dynamic data transmission methods and apparatuses and a storage medium, which solve a problem of large transmission delay in the related art.

An embodiment of the present application provides a dynamic data transmission method, including:
receiving first information carried by media access control (MAC) layer information carried in a first physical downlink shared channel (PDSCH) resource, where the first information is used to indicate a terminal to perform corresponding PDSCH data reception through a second PDSCH resource; and
performing corresponding PDSCH data reception through the second PDSCH resource based on the first information.

In an embodiment, the first information is resource allocation information of the second PDSCH resource.

In an embodiment, the resource allocation information is a subset or a full set of PDSCH resource allocation information.

In an embodiment, the resource allocation information at least includes one or more of the following information:
frequency domain resource allocation (FDRA) information;
time domain resource allocation (TDRA) information;
a modulation and coding scheme (MCS) level;
new data indicator (NDI);
redundancy version (RV);
hybrid automatic repeat reQuest (HARQ) related information; or
an antenna port.

In an embodiment, the resource allocation information is carried in an additional information field in the MAC layer information.

In an embodiment, the first information is resource allocation indication information of the second PDSCH resource.

In an embodiment, the resource allocation indication information at least includes one or more of the following information:
a resource allocation information field indicator; or
a modification indicator of a resource allocation information field.

In an embodiment, the first PDSCH resource is a semi-persistent scheduling (SPS) PDSCH resource, a PDSCH resource scheduled by downlink control information (DCI), or a lastly scheduled second PDSCH resource.

In an embodiment, the method further includes:
determining a first time location where the second PDSCH resource is located.

In an embodiment, the first time location is a slot or a time duration of a time window.

In an embodiment, the first time location is carried by one or more of the following information:
physical layer information;
MAC layer information; or
higher layer information.

In an embodiment, the physical layer information includes DCI information indicating the first PDSCH resource; and/or
the MAC layer information includes MAC layer information carrying the first information.

In an embodiment, the determining the first time location of the second PDSCH resource includes:
receiving second information, where the second information is used to indicate the first time location where the second PDSCH resource is located; and
determining the first time location where the second PDSCH resource is located based on the second information.

In an embodiment, the method further includes:
receiving third information; and
terminating the corresponding PDSCH data reception through the second PDSCH resource based on the third information.

An embodiment of the present application further provides a dynamic data transmission method, including:
transmitting first information carried by media access control (MAC) layer information carried in a first physical downlink shared channel (PDSCH) resource, where the first information is used to indicate a terminal to perform corresponding PDSCH data reception through a second PDSCH resource.

In an embodiment, the transmitting the first information carried by the MAC layer information carried in the first PDSCH resource includes:
reusing time-frequency resource allocation information of a slot where a PDSCH is configured, where resource allocation information of the second PDSCH resource carried by the MAC layer information is slot information; or
performing difference indication, based on configured parameters of a PDSCH, of a parameter subset.

In an embodiment, the method further includes:
transmitting second information, where the second information is used to indicate the first time location where the second PDSCH resource is located.

In an embodiment, the method further includes:
transmitting third information, where the third information is used to indicate the terminal to terminate the corresponding PDSCH data reception through the second PDSCH resource.

An embodiment of the present application further provides a terminal, including a memory, a transceiver and a processor,
where the memory is used for storing a computer program, the transceiver is used for transmitting and receiving data under control of the processor, and the processor is used for reading the computer program stored in the memory and performing the following operations of:
receiving first information carried by media access control (MAC) layer information carried in a first physical downlink shared channel (PDSCH) resource, where the first information is used to indicate a terminal to perform corresponding PDSCH data reception through a second PDSCH resource; and
performing corresponding PDSCH data reception through the second PDSCH resource based on the first information.

In an embodiment, the first information is resource allocation information of the second PDSCH resource.

In an embodiment, the resource allocation information is a subset or a full set of PDSCH resource allocation information.

In an embodiment, the resource allocation information at least includes one or more of the following information:
frequency domain resource allocation (FDRA) information;
time domain resource allocation (TDRA) information;
a modulation and coding scheme (MCS) level;
a new data indicator (NDI);
a redundancy version (RV);
hybrid automatic repeat reQuest (HARQ) related information; or
an antenna port.

In an embodiment, the resource allocation information is carried in an additional information field in the MAC layer information.

In an embodiment, the first information is resource allocation indication information of the second PDSCH resource.

In an embodiment, the resource allocation indication information at least includes one or more of the following information:
a resource allocation information field indicator; or
a modification indicator of a resource allocation information field.

In an embodiment, the first PDSCH resource is a semi-persistent scheduling (SPS) PDSCH resource, a PDSCH resource scheduled by downlink control information (DCI), or a lastly scheduled second PDSCH resource.

In an embodiment, the processor is further used for performing the operations of:
determining a first time location where the second PDSCH resource is located.

In an embodiment, the first time location is a slot or a time duration of a time window.

In an embodiment, the first time location is carried by one or more of the following information:
physical layer information;
MAC layer information; or
higher layer information.

In an embodiment, the physical layer information includes DCI information indicating the first PDSCH resource; and/or
the MAC layer information includes MAC layer information carrying the first information.

In an embodiment, the determining the first time location of the second PDSCH resource includes:
receiving second information, where the second information is used to indicate the first time location where the second PDSCH resource is located; and
determining the first time location where the second PDSCH resource is located based on the second information.

In an embodiment, the processor is further used for performing the operations of:
receiving third information; and
terminating the corresponding PDSCH data reception through the second PDSCH resource based on the third information.

An embodiment of the present application further provides a network side device, including a memory, a transceiver and a processor,
where the memory is used for storing a computer program, the transceiver is used for transmitting and receiving data under control of the processor, and the processor is used for reading the computer program stored in the memory and performing the following operation of
transmitting first information carried by media access control (MAC) layer information carried in a first physical downlink shared channel (PDSCH) resource, where the first information is used to indicate a terminal to perform corresponding PDSCH data reception through a second PDSCH resource.

In an embodiment, the transmitting the first information carried by the MAC layer information carried in the first PDSCH resource includes:
reusing time-frequency resource allocation information of a slot where a PDSCH is configured, where resource allocation information of the second PDSCH resource carried by the MAC layer information is slot information;
   or,
performing difference indication, based on configured parameters of a PDSCH, of a parameter subset.

In an embodiment, the processor is further used for performing the operations of:
transmitting second information, where the second information is used to indicate the first time location where the second PDSCH resource is located.

In an embodiment, the processor is further used for performing the operations of:
transmitting third information, where the third information is used to indicate the terminal to terminate the corresponding PDSCH data reception through the second PDSCH resource.

An embodiment of the present application further provides a dynamic data transmission apparatus, including:
a first receiving module, used for receiving first information carried by media access control (MAC) layer information carried in a first physical downlink shared channel (PDSCH) resource, where the first information is used to indicate a terminal to perform corresponding PDSCH data reception through a second PDSCH resource; and
a second receiving module, used for performing corresponding PDSCH data reception through the second PDSCH resource based on the first information.

In an embodiment, the first information is resource allocation information of the second PDSCH resource.

In an embodiment, the resource allocation information is a subset or a full set of PDSCH resource allocation information.

In an embodiment, the resource allocation information at least includes one or more of the following information:
frequency domain resource allocation (FDRA) information;
time domain resource allocation (TDRA) information;
a modulation and coding scheme (MCS) level;
a new data indicator (NDI);
a redundancy version (RV);
hybrid automatic repeat reQuest (HARQ) associated information; or
an antenna port.

In an embodiment, the resource allocation information is carried in an additional information field in the MAC layer information.

In an embodiment, the first information is resource allocation indication information of the second PDSCH resource.

In an embodiment, the resource allocation indication information at least includes one or more of the following information:
a resource allocation information field indicator; or
a modification indicator of a resource allocation information field.

In an embodiment, the first PDSCH resource is a semi-persistent scheduling (SPS) PDSCH resource, a PDSCH resource scheduled by downlink control information (DCI), or a lastly scheduled second PDSCH resource.

In an embodiment, the apparatus further includes a first determining module,
where the first determining module is used for determining a first time location where the second PDSCH resource is located.

In an embodiment, the first time location is a slot or a time duration of a time window.

In an embodiment, the first time location is carried by one or more of the following information:
physical layer information;
MAC layer information; or
higher layer information.

In an embodiment, the physical layer information includes DCI information indicating the first PDSCH resource; and/or
the MAC layer information includes MAC layer information carrying the first information.

In an embodiment, the first determining module includes a first receiving sub-module and a first determining sub-module,
where the first receiving sub-module is used for receiving second information, where the second information is used to indicate the first time location where the second PDSCH resource is located; and
the first determining sub-module is used for determining the first time location where the second PDSCH resource is located based on the second information.

In an embodiment, the apparatus further includes a third receiving module and a terminating module,
where the third receiving module is used for receiving third information; and
the terminating module is used for terminating the corresponding PDSCH data reception through the second PDSCH resource based on the third information.

An embodiment of the present application further provides a dynamic data transmission apparatus, including:
a first transmitting module, used for transmitting first information carried by media access control (MAC) layer information carried in a first physical downlink shared channel (PDSCH) resource, where the first information is used to indicate a terminal to perform corresponding PDSCH data reception through a second PDSCH resource.

In an embodiment, the first transmitting module is specifically used for:
reusing time-frequency resource allocation information of a slot where a PDSCH is configured, where resource allocation information of the second PDSCH resource carried by the MAC layer information is slot information;
   or,
performing difference indication, based on configured parameters of a PDSCH, of a parameter subset.

In an embodiment, the apparatus further includes a second transmitting module,
where the second transmitting module is used for transmitting second information, where the second information is used to indicate the first time location where the second PDSCH resource is located.

In an embodiment, the apparatus further includes a third transmitting module,
where the third transmitting module is used for transmitting third information, where the third information is used to indicate the terminal to terminate the corresponding PDSCH data reception through the second PDSCH resource.

An embodiment of the present application further provides a processor-readable storage medium storing a computer program that, when executed by a processor, causes the processor to perform the steps of the dynamic data transmission method described above.

In the dynamic data transmission methods and apparatuses and the storage medium provided by the embodiments of the present application, the first information is carried by the MAC layer information carried in the first PDSCH resource, and the terminal is indicated to perform corresponding PDSCH data reception on the second PDSCH resource, to achieve dynamic data transmission without scheduling DCI, and reduce transmission delay.

### BRIEF DESCRIPTION OF THE DRAWINGS

In order to clearly illustrate the solutions disclosed in the embodiments of the present application, the drawings used in the descriptions of the embodiments are briefly described below. The drawings in the following description are only some embodiments of the present application, and other drawings may be obtained according to these drawings without creative work for those skilled in the art.
FIG. 1 is a first schematic flowchart of a dynamic data transmission method according to an embodiment of the present application;
FIG. 2 is a first schematic mechanism diagram of dynamic data transmission according to an embodiment of the present application;
FIG. 3 is a second schematic mechanism diagram of dynamic data transmission according to an embodiment of the present application;
FIG. 4 is a third schematic mechanism diagram of dynamic data transmission according to an embodiment of the present application;
FIG. 5 is a second schematic flowchart of a dynamic data transmission method according to an embodiment of the present application;
FIG. 6 is a schematic structural diagram of a terminal according to an embodiment of the present application;
FIG. 7 is a schematic structural diagram of a network side device according to an embodiment of the present application;
FIG. 8 is a first schematic structural diagram of a dynamic data transmission apparatus according to an embodiment of the present application; and
FIG. 9 is a second schematic structural diagram of a dynamic data transmission apparatus according to an embodiment of the present application.

### DETAILED DESCRIPTION

Although for a semi-persistent scheduling (SPS) physical downlink shared channel (PDSCH), PDSCH transmission may be performed based on a configured resource during an off duration of discontinuous reception (DRX), when a size of a data service packet fluctuates greatly, for example, a size of a data packet of extended reality (XR) service obeys Gaussian distribution, a reserved SPS PDSCH resource cannot achieve transmission of data packets with different sizes, and transmission of remaining data in a buffer can only be finished until a next SPS PDSCH or an on duration of the DRX. When a service has a high latency requirement, this waiting for transmission will inevitably cause a transmission delay, resulting in failing to meet the requirement of the service.

Based on the above problems, in dynamic data transmission methods and apparatuses, and a storage medium provided by embodiments of the present application, first information carried by a media access control (MAC) layer information carried in a first PDSCH resource is configured to indicate a terminal to perform corresponding PDSCH data reception on a second PDSCH resource, to achieve dynamic data transmission without scheduling downlink control information (DCI), and reduce transmission delay.

In order to illustrate the objectives, solutions and advantages of the present application clearly, the solutions in the embodiments of the present application are clearly and completely described in the following in conjunction with the accompanying drawings in the present application. These embodiments are a part of the embodiments of the present application, and not all of the embodiments. All other embodiments obtained by a person of ordinary skill in the art based on the embodiments of the present application without creative work are within the scope of the present application.

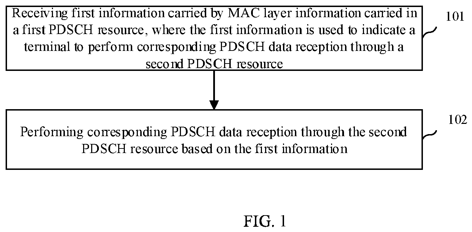

FIG. 1 is a first schematic flowchart of a dynamic data transmission method according to an embodiment of the present application. As shown in FIG. 1, an embodiment of the present application provides a dynamic data transmission method, which may be performed by a terminal/user equipment (UE), such as a mobile phone, etc. The method includes the following steps.

Step 101: receiving first information carried by media access control (MAC) layer information carried in a first physical downlink shared channel (PDSCH) resource, where the first information is used to indicate a terminal to perform corresponding PDSCH data reception through a second PDSCH resource.

In an embodiment, when a configured or scheduled PDSCH transmission resource is insufficient to transmit data in a cache of a base station, the base station transmits the first information carried by the MAC layer information carried in the first PDSCH resource to the UE. The first information is used to indicate the terminal to perform corresponding PDSCH data reception through the second PDSCH resource.

In addition, even if there is no data in a data cache area of the base station, the first information carried by the MAC layer information carried in the first PDSCH resource may be used to pre-allocate or occupy the PDSCH resource in advance or modify the resource allocation information of a certain semi-persistent scheduling (SPS) PDSCH cycle.

Step 102: performing corresponding PDSCH data reception through the second PDSCH resource based on the first information.

In an embodiment, the terminal receives the first information carried by the MAC layer information carried in the first PDSCH resource.

The terminal performs corresponding PDSCH data reception through the second PDSCH resource indicated by the first information.

In an embodiment, the first PDSCH resource is an SPS PDSCH resource, a PDSCH resource scheduled by downlink control information (DCI), or a lastly scheduled second PDSCH resource.

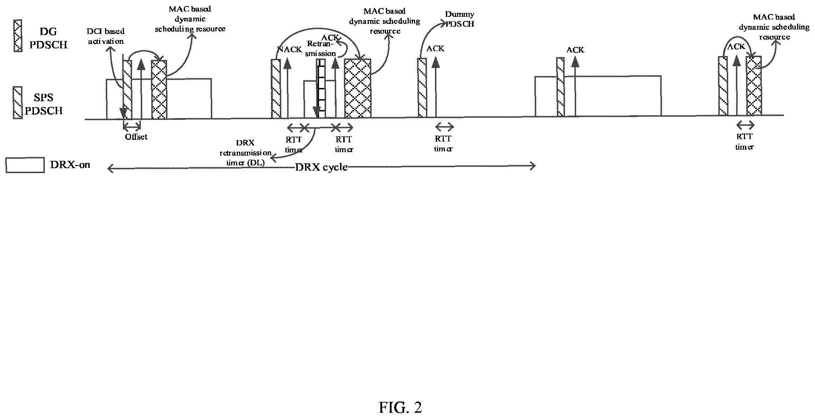

FIG. 2 is a first schematic mechanism diagram of dynamic data transmission according to an embodiment of the present application. As shown in FIG. 2, the base station carries the first information through the MAC layer information carried in the SPS PDSCH resource. The first information is used to indicate the terminal to perform corresponding PDSCH data reception through the second PDSCH resource.

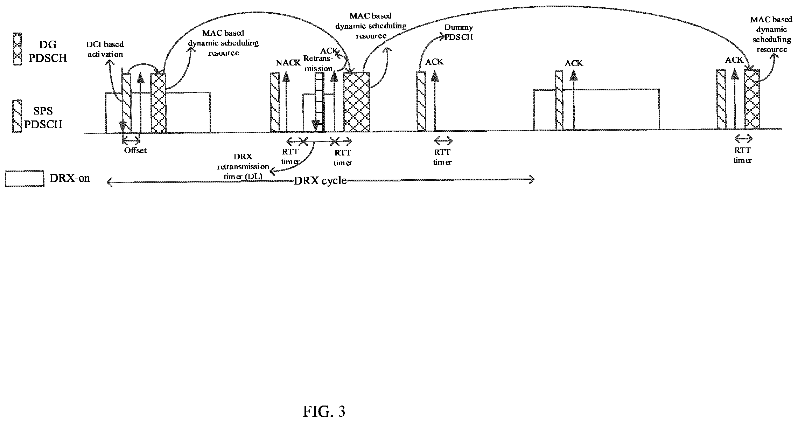

FIG. 3 is a second schematic mechanism diagram of dynamic data transmission according to an embodiment of the present application. As shown in FIG. 3, the base station carries the first information through the MAC layer information carried in the lastly scheduled second PDSCH resource. The first information is used to indicate the terminal to perform corresponding PDSCH data reception through the second PDSCH resource.

In the embodiment of the present application, the first information is carried by the MAC layer information carried in the SPS PDSCH resource, the PDSCH resource scheduled by the DCI, or the lastly scheduled second PDSCH resource, which riches flexibility.

In an embodiment, the first information is resource allocation information of the second PDSCH resource.

In an embodiment, the base station carries dynamic resource allocation information through the MAC layer information in the first PDSCH resource to indicate the resource allocation information of the second PDSCH resource, such as a resource allocation time domain, a resource allocation frequency domain, a resource allocation spatial domain and other resource occupancy information. The resource allocation information may be complete configuration of the time domain resource, the frequency domain resource, the spatial domain resource and other resources, or partial configuration of the time domain resource, the frequency domain resource, the spatial domain resource and other resources. The terminal performs PDSCH reception information, simultaneously obtains the resource allocation information of the second PDSCH resource from the MAC layer information of the PDSCH information, and performs PDSCH information reception based on the resource indicated by the resource allocation information of the second PDSCH resource.

In the embodiment of the present application, the resource allocation information of the second PDSCH resource is directly carried by the first information, which improves data transmission efficiency.

Before the terminal performs corresponding PDSCH data reception through the second PDSCH resource, a first time location of the second PDSCH resource needs to be determined.

In an embodiment, the first time location may be a specific slot or a time duration of a time window.

In an embodiment, a specific time window is taken as an example to indicate the terminal to perform PDSCH data reception within a period of time. The specific configuration mode may be one or a combination of the following modes.

Mode 1: a start time of the first time location and a duration T of the first time location. The terminal continues to receive PDSCH from the start time of the first time location for the duration T of the first time location, and then the terminal stops receiving the PDSCH.

Mode 2: a start time of the first time location and a timer representing a duration. The terminal continues to receive PDSCH from the start time of the first time location until the timer representing the duration expires, and then the terminal stops receiving the PDSCH.

Mode 3: a start time of the first time location and an end time of the first time location. The terminal continues to receive PDSCH from the start time of the first time location to the end time of the first time location.

Mode 4: a start time of the first time location and a termination indication of the first time location. The terminal starts receiving PDSCH from the start time of the first time location, and performs PDSCH reception based on a certain time granularity (a slot or a symbol or a symbol span or a millisecond, etc.), such as a unit granularity or a fixed granularity, until the terminal receives the termination indication, for example, dynamic scheduling termination indication information or a termination indication carried in a physical layer, a MAC layer, a higher layer, or other information (which is different from the dynamic scheduling termination indication information).

When the terminal performs PDSCH reception at the first time location, the terminal may perform PDSCH reception at a complete first time location (here, the first time location is a time window), or it may indicate to stop PDSCH reception through the dynamic scheduling termination indication information within the first time location (the time window).

The terminal performs corresponding PDSCH data reception on the second PDSCH resource at the first time location, which may save dynamically scheduled DCI and reduce signaling overhead.

In an embodiment, the first time location may be a specified time location and/or a time location indicated by the base station.

In an embodiment, the specified first time location is a time location specified in an agreement between the base station and the terminal.

For example, the specified first time location is in an N1-th slot before or after a slot where a K-th SPS PDSCH locates, N1 is an integer greater than or equal to 0.

For another example, the specified first time location is in an N2-th slot before or after a slot where a hybrid automatic repeat reQuest acknowledgement (HARQ-ACK) feedback of the initial transmission of the K-th SPS PDSCH is performed, N2 is an integer greater than or equal to 0.

For another example, the specified first time location is in an N3-th slot after successful reception of the K-th SPS PDSCH, or before or after a slot where a maximum number of retransmissions of HARQ-ACK feedback is reached, N3 is an integer greater than or equal to 0.

For another example, the specified first time location is in an N4-th slot before or after a round trip time (RTT) timer starts or expires within a K-th SPS PDSCH cycle, N4 is an integer greater than or equal to 0.

It should be noted that, the K-th SPS PDSCH cycle in the above example may be a current SPS PDSCH cycle, or a cycle after the current SPS PDSCH cycle, or a PDSCH cycle of a configured SPS PDSCH (when the terminal is configured with multiple SPS PDSCHs). When the values of N1, N2, N3 and N4 are 0, it represents that the specified first time location is in a slot where the K-th SPS PDSCH is located. K, N1, N2, N3 and N4 may be specified through a protocol or configured through higher layer signaling.

The first time location is defined through the protocol, which reduces signaling overhead.

In an embodiment, the method further includes:
transmitting second information, where the second information is used to indicate the first time location where the second PDSCH resource is located.

In an embodiment, the first time location is indicated by the base station. The base station transmits the second information to the terminal, where the second information is used to indicate the first time location where the second PDSCH resource is located.

The first time location and the resource allocation information of the second PDSCH resource may be carried in the same layer information, such as MAC layer information, or they may be carried in different signaling, such as different layer information or different signaling of the same layer.

The first time location and the resource allocation information of the second PDSCH resource may also be carried in different layer information.

For example, time domain information in the resource allocation information of the second PDSCH resource is symbol information in a slot where the first time location is located, and is carried in the MAC layer information, the first time location is configured through higher layer signaling.

The first time location and the resource allocation information of the second PDSCH resource may also be carried in the same layer information.

For example, the MAC layer information includes both the first time location and the resource allocation information of the second PDSCH resource.

In an embodiment, the first time location is indicated by the base station through physical layer information, MAC layer information, and higher layer information.

The physical layer information includes DCI information indicating the first PDSCH resource, and the first time location is carried through DCI signaling. DCI signaling includes activating DCI, deactivating DCI, scheduling DCI, and non-scheduling DCI of SPS PDSCH.

The MAC layer information includes MAC layer information carrying the first information, and the above-mentioned first time location is carried through the MAC layer information. For example, the first time location is indicated separately through a MAC control element (MAC CE), or carried in a MAC service data unit (MAC SDU), or carried in the resource allocation information of the second PDSCH resource.

In an embodiment, the specific time location is configured through higher layer signaling. For example, the higher layer signaling is used to configure the first time location separately.

The first time location is indicated through the base station, which improves the flexibility of a system.

In an embodiment, the resource allocation information is a full set of the PDSCH resource allocation information, or it is called full-domain allocation information.

In an embodiment, the resource allocation information is the full set of the PDSCH resource allocation information, that is, the resource allocation information may be complete configuration information of the time domain resource, the frequency domain resource, the spatial domain resource and other resources.

When the base station configures SPS PDSCH for the terminal and has activated it, the terminal may perform PDSCH reception at a configured slot location. For a configured N-th SPS PDSCH cycle (the first PDSCH resource), if a data packet in the base station data cache area is not completely transmitted through the configured PDSCH resource, in order to reduce scheduled waiting delay of the data packet in the data cache area, the resource allocation information of the second PDSCH resource is carried through the MAC layer information in the SPS PDSCH. The second PDSCH resource is used to transmit some or all of the remaining data in the base station cache area, and notifies the terminal to perform PDSCH reception at the first time location.

In the embodiment of the present application, the resource allocation information of the second PDSCH resource carried through the MAC layer information is complete resource allocation information, that is, locations of the time domain resource, the frequency domain resource, and the spatial domain resource where the second PDSCH resource is located may be directly obtained based on the resource allocation information.

The resource allocation information is the full-domain allocation information, which improves system efficiency.

In an embodiment, the resource allocation information is the same as the resource allocation information carried in dynamic scheduling DCI format 1_0, format 1_1 or format 1_2.

In an embodiment, the resource allocation information is the same as the resource allocation information carried in dynamic scheduling DCI format 1_0, format 1_1, and format 1_2, which reduces signaling overhead.

In an embodiment, the resource allocation information at least includes one or more of the following information:
frequency domain resource allocation (FDRA) information;
time domain resource allocation (TDRA) information;
a modulation and coding scheme (MCS) level;
new data indicator (NDI);
redundancy version (RV);
hybrid automatic repeat reQuest (HARQ) associated information; or
an antenna port.

In an embodiment, a new information field is added to the MAC layer information, to carry the resource allocation information of the second PDSCH resource.

In an embodiment, the resource allocation information is a subset of the PDSCH resource allocation information, or called partial allocation information.

In an embodiment, the base station configures SPS PDSCH for the terminal and has activated it, the terminal may perform PDSCH reception at a configured slot location. For a configured N-th SPS PDSCH cycle (the first PDSCH resource), if a data packet in the base station data cache area are not completely transmitted through the configured PDSCH resource, in order to reduce scheduled waiting delay of the data packet in the data cache area, the resource allocation information of the second PDSCH resource is carried through the MAC layer information in the SPS PDSCH. The second PDSCH resource is used to transmit some or all of the remaining data in the base station cache area, and notifies the terminal to perform PDSCH reception at the first time location.

In the embodiment of the present application, the resource allocation information of the second PDSCH resource carried through the MAC layer information is a subset of the PDSCH resource allocation information, that is, configuration information of the resource configuration information associated with other PDSCH resource information.

Other PDSCH resources include: a K1-th SPS PDSCH cycle, or a dynamically scheduled PDSCH of the first PDSCH resource, or a PDSCH of a designated slot K2.

It should be noted that: the K1-th SPS PDSCH cycle may be a current SPS PDSCH cycle, or it may be a cycle other than the current SPS PDSCH cycle, or it may be a PDSCH cycle of the configured SPS PDSCH (when the terminal is configured with multiple SPS PDSCHs).

In an embodiment, transmitting the first information carried by the MAC layer information carried in the first PDSCH resource includes:
reusing time-frequency resource allocation information of a slot where a PDSCH is configured, where resource allocation information of the second PDSCH resource carried by the MAC layer information is slot information; or,
performing difference indication, based on configured parameters of a PDSCH, of a parameter subset.

In an embodiment, the specific partial configuration information may be one or a combination of the following modes.

Mode 1: the time-frequency resource allocation information of the slot where the SPS PDSCH is located is multiplexed in the dynamic resource allocation information. Meanwhile, the resource allocation information of the second PDSCH resource carried by the MAC layer information is the slot information. Specifically, it is achieved through one of the following modes.
1. First time location and/or continuous PDSCH reception duration (dynamicPDSCHduration). If the first time location is a certain slot, the resource allocation information is a duration for continuous reception starting from the first time location.
2. A time window independent of the first time location (DynamicPDSCHwindow), which indicates the terminal to perform reception of the second PDSCH resource within the time window.

Mode 2: the MAC layer information is configured based on the parameters of the configured SPS PDSCH. The subsequent second PDSCH resource only performs difference indication on one parameter or a combination of several parameters among the FDRA information, the TDRA information, the MCS level, the NDI, the RV, the HARQ associated information and the antenna port.

For example, the second PDSCH resource performs modification indication on the MCS information, the frequency domain resource information, the time domain resource information and other information based on the parameters of the configured SPS PDSCH. In the MAC layer information, K1, K2 and K3 bits are used to indicate these three information fields respectively. The K-bit indication information of each information field may specifically indicate a numerical value, an index value of a certain configuration, or a category value of a certain configuration classification.

When the terminal receives the SPS PDSCH, it obtains the resource allocation information of the second PDSCH resource from its MAC layer information, and then performs PDSCH reception based on the resource indicated by the resource allocation information at the first time location.

It should be noted that the configured PDSCH includes the configured SPS PDSCH, the scheduled PDSCH and the second resource PDSCH that has been indicated. The above mode only takes the configured SPS PDSCH as an example for implementation description. The same mode is also applicable to the scheduled PDSCH and the second resource PDSCH that has been indicated.

In an embodiment, the first information is the resource allocation indication information of the second PDSCH resource.

In an embodiment, the base station carries the dynamic resource indication information through the MAC layer information in the SPS PDSCH, which is used to indicate the resource allocation time domain, the frequency domain, the spatial domain and other resource occupancy information of the second PDSCH resource.

In an embodiment, the dynamic resource indication information includes a resource allocation information field indicator and/or a modification indicator of the resource allocation information field, that is, a resource allocation information field of one or several information fields in the scheduling DCI is indicated through the resource allocation information field indicator, and/or a resource allocation information field of one or several information fields in the scheduling DCI is indicated through a modification indicator of the resource allocation information field.

Quantitative coding is performed by the base station for the information fields of PDSCH resource allocation and carried in a higher layer signaling, including one or a combination of the following information fields: the FDRA information, the TDRA information, the MCS level, the NDI, the RV, the HARQ associated information, the antenna port and other information fields. The resource allocation information field indicator means that segmentation indication is performed through Ki bits for each of the above information fields, where Ki is less than or equal to the maximum number of bits of each information field. The following are only examples of representative parameters.
1. The frequency domain resources in a currently activated BWP are divided into K1 bits. For example, traditional FDRA performs resource allocation indication through a resource block group (RBG), by using bit mapping or resource indicator value (RIV) calculation. The number indicated by K1 is less than the number of RBGs or the number of RBGs calculated by the RIV. For example, the number of RBGs or the number of RBGs calculated by the RIV is divided into K1 segments or 2^K1 segments or a certain numerical segment ranging from K1 to 2^K1. The K1 bit is the bit map of the K1 segment, or a specific segment in the 2^K1 segments.
2. A current TDRA is represented as K2 bits, corresponding to up to 2^K2 parameter configurations, where 2^K2 is less than or equal to 4.
3. The MCS level is K3 bits, where K3 is less than or equal to 5, and is used to indicate the modulation and coding level of the PDSCH. For a value where K3 is less than 5, the MCS table may be segmented into 2^K3 segments. Each value indicates any MCS level in the 2^K3 segments, such as a first, a middle, a last or a specific value in each segment.
4. The number of HARQ processes is K4 bits, where K4 is less than or equal to 4, and is used to indicate the number of HARQ processes for PDSCH, such as, K4=1 or 2 or 3.
5. The MAC layer carries a bit mapping table of N scheduling DCI information fields, which is used to indicate whether corresponding information field parameters are modified. Each scheduling DCI information field corresponds to Ki (i = 1, ..., N) bits, which are used to indicate the modification identifier of an information field (whether it is modified), or a specific value of an information field, or a modification index value of an information field, etc.

For example, N (where N is greater than or equal to 0) resource allocation information fields in the information field in the scheduling DCI are indicated through bit mapping, which is used to indicate whether the corresponding information field parameters are modified. Each scheduling DCI information field corresponds to Ki (i = 1, ..., N) bits, which are used to indicate the modification identification of an information field (whether it is modified), or a specific value of an information field, or a modification index value of an information field, etc.

The dynamic resource indication information carried by the MAC layer information may carry modification indicators of one or several resource allocation information fields in the scheduling DCI, including, but not limited to, the FDRA information, the TDRA information, the MCS level, the NDI, the RV, the HARQ associated information, the antenna port and other information fields.

In an embodiment, the method further includes:
transmitting third information, where the third information is used to indicate the terminal to terminate corresponding PDSCH data reception through the second PDSCH resource.

In an embodiment, when transmission of the data in the base station cache area is completed, the base station transmits the third information (dynamic scheduling termination indication information) to the terminal to notify the terminal that there is no data transmission on the second PDSCH resource.

The dynamic scheduling termination indication information is used to indicate the terminal to terminate corresponding PDSCH data reception through the second PDSCH resource.

The dynamic scheduling termination indication information may be carried in the same information as the second PDSCH resource allocation information, or may be carried in different information.

The dynamic scheduling termination indication information may be carried in physical layer information, MAC layer information, higher layer information and other information, which may include the following modes.

Mode 1: The dynamic scheduling termination indication information is carried by the MAC layer information. For example, when the resource allocation information of the second PDSCH resource is empty or all 0 or all 1 or has a specific value (configuration), the terminal terminates PDSCH reception at the first time location; otherwise, the terminal performs PDSCH reception at the first time location based on the configuration.

Mode 2: the dynamic scheduling termination indication information is carried by a MAC control element (CE). For example, when the MAC CE carries the dynamic scheduling termination indication information as information 1, the terminal terminates PDSCH reception at the first time location; when the MAC CE carries the dynamic scheduling termination indication information as information 2, the terminal performs PDSCH reception at the first time location based on the configuration.

Mode 3: the dynamic scheduling termination indication information is carried by physical layer (L1) signaling. For example, when the physical layer (L1) signaling carries the dynamic scheduling termination indication information as information 1, the terminal terminates PDSCH reception at the first time location; when the physical layer (L1) signaling carries the dynamic scheduling termination indication information as information 2, the terminal performs PDSCH reception at the first time location based on the configuration.

Mode 4: the dynamic scheduling termination indication information is carried by higher layer signaling. For example, the higher layer signaling configures a timer associated with the dynamic scheduling termination indication information. When the timer expires, the terminal terminates PDSCH reception at the first time location; otherwise, the terminal performs PDSCH reception at the first time location based on the configuration.

The terminal terminates corresponding PDSCH data reception through the second PDSCH resource, thereby reducing terminal power consumption.

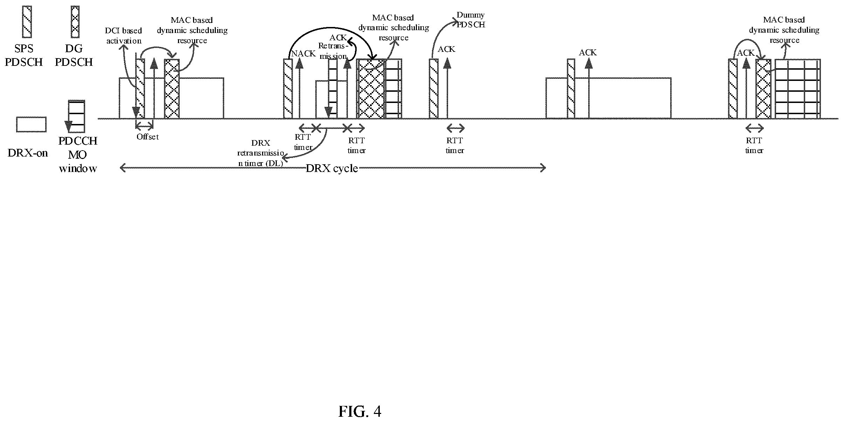

In an embodiment, FIG. 4 is a third schematic mechanism diagram of dynamic data transmission according to an embodiment of the present application. As shown in FIG. 4, if a PDSCH scheduled by DCI in a service-specific monitoring window conflicts with the second PDSCH resource, that is, if some or all resources (in the time domain, frequency domain or spatial domain) overlap, one or more of the following modes may be used.

Mode 1: only the PDSCH resource carried in the MAC layer information is received.

Mode 2: only a PDSCH resource scheduled by DCI in the monitoring window is received.

Mode 3: both PDSCH resources are received simultaneously or non-overlapping parts of both PDSCH resources are received.

If the two PDSCHs cannot be distinguished on an overlapping resource, the retransmission procedure is triggered, and the two PDSCHs are further distinguished through retransmissions. The complete PDSCH retransmission may be performed on both of the two PDSCH separately, or the overlapping PDSCHs may be retransmitted.

If the two PDSCHs may be distinguished on an overlapping resource by the spatial resource or being coded, the two PDSCHs are received simultaneously.

Mode 4: both PDSCH resources are not received.

Mode 5: if the two PDSCHs are configured with priorities, the PDSCH with a higher priority is received.

If the PDSCH scheduled by DCI and the second PDSCH resource in the service-specific monitoring window are in different symbols in the same slot, the terminal may receive the two PDSCHs.

In the embodiment of the present application, resource conflicts are avoided and reliability is improved.

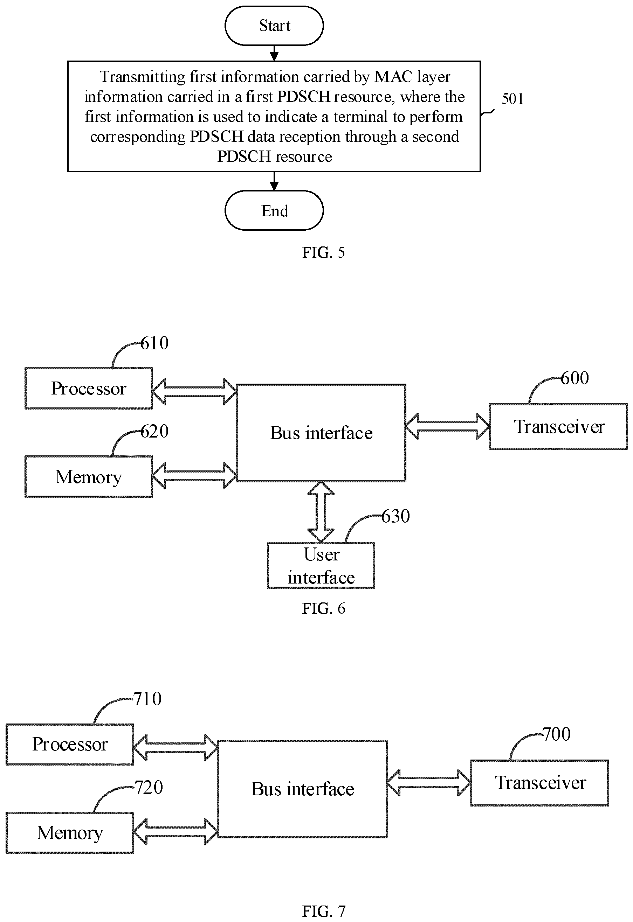

FIG. 5 is a second schematic flowchart of a dynamic data transmission method according to an embodiment of the present application. As shown in FIG. 5, an embodiment of the present application provides a dynamic data transmission method, which may be performed by a network side device, such as a base station, etc. The method includes the following steps.

Step 501: transmitting first information carried by media access control (MAC) layer information carried in a first physical downlink shared channel (PDSCH) resource, where the first information is used to indicate a terminal to perform corresponding PDSCH data reception through a second PDSCH resource.

In an embodiment, transmitting the first information carried by the MAC layer information carried in the first PDSCH resource includes:
reusing time-frequency resource allocation information of a slot where a PDSCH is configured, where resource allocation information of the second PDSCH resource carried by the MAC layer information is slot information; or,
performing difference indication, based on configured parameters of a PDSCH, of a parameter subset.

In an embodiment, the method further includes:
transmitting second information, where the second information is used to indicate a first time location where the second PDSCH resource is located.

In an embodiment, the method further includes:
transmitting third information, where the third information is used to indicate the terminal to terminate the corresponding PDSCH data reception through the second PDSCH resource.

The dynamic data transmission method provided by the embodiments of the present application may refer the above-mentioned dynamic data transmission method embodiment applied to the terminal, and may achieve the same effect. The corresponding method in this embodiment and the above-mentioned ones is not repeated here. The same parts and beneficial effects of the method embodiments are not described in detail.

FIG. 6 is a schematic structural diagram of a terminal according to an embodiment of the present application. As shown in FIG. 6, the terminal includes a memory 620, a transceiver 600 and a processor 610,
where the memory 620 is used for storing a computer program, the transceiver 600 is used for transmitting and receiving data under control of the processor 610, and the processor 610 is used for reading the computer program stored in the memory 620 and performing the following operations of:
receiving first information carried by media access control (MAC) layer information carried in a first physical downlink shared channel (PDSCH) resource, where the first information is used to indicate a terminal to perform corresponding PDSCH data reception through a second PDSCH resource; and
performing corresponding PDSCH data reception through the second PDSCH resource based on the first information.

In an embodiment, the transceiver 600 is used for transmitting and receiving data under control of the processor 610.

In FIG. 6, a bus architecture may include any number of interconnected buses and bridges, which are linked together through various circuits of one or more processors represented by processor 610 and one or more memories represented by the memory 620. The bus architecture may also link together various other circuits, such as peripherals, voltage regulators, and power management circuits. The bus interface provides an interface. The transceiver 600 may be multiple elements, i.e., including a transmitter and a receiver, units for providing communication with various other devices over transmission media including wireless channels, wired channels, fiber optic cables, and the like. For different user equipment, the user interface 630 may also be an interface capable of externally or internally connecting the required equipment, and the connected equipment includes, but not limited to, a keypad, a display, a speaker, a microphone, a joystick, and the like.

The processor 610 is responsible for managing the bus architecture and general processing, and the memory 620 may store data used by the processor 610 when performing operations.

In an embodiment, the processor 610 may be a central processing unit (CPU), an application specific integrated circuit (ASIC), a field-programmable gate array (FPGA), or a complex programmable logic device (CPLD), the processor may also use a multi-core architecture.

The processor is configured to execute any of the methods provided by the embodiments of the present application according to the obtained executable instructions by calling the computer program stored in the memory. The processor and memory may also be physically separated.

In an embodiment, the first information is resource allocation information of the second PDSCH resource.

In an embodiment, the resource allocation information is a subset or a full set of PDSCH resource allocation information.

In an embodiment, the resource allocation information at least includes one or more of the following information:
frequency domain resource allocation (FDRA) information;
time domain resource allocation (TDRA) information;
a modulation and coding scheme (MCS) level;
a new data indicator (NDI);
a redundancy version (RV);
hybrid automatic repeat reQuest (HARQ) associated information; or
an antenna port.

In an embodiment, the resource allocation information is carried in an additional information field in the MAC layer information.

In an embodiment, the first information is resource allocation indication information of the second PDSCH resource.

In an embodiment, the resource allocation indication information at least includes one or more of the following information:
a resource allocation information field indicator; or
a modification indicator of a resource allocation information field.

In an embodiment, the first PDSCH resource is a semi-persistent scheduling (SPS) PDSCH resource, a PDSCH resource scheduled by downlink control information (DCI), or a lastly scheduled second PDSCH resource.

In an embodiment, the processor is further used for performing the operations of:
determining a first time location where the second PDSCH resource is located.

In an embodiment, the first time location is a slot or a time duration of a time window.

In an embodiment, the first time location is carried by one or more of the following information:
physical layer information;
MAC layer information; or
higher layer information.

In an embodiment, the physical layer information includes DCI information indicating the first PDSCH resource; and/or
the MAC layer information includes MAC layer information carrying the first information.

In an embodiment, determining the first time location of the second PDSCH resource includes:
receiving second information, where the second information is used to indicate the first time location where the second PDSCH resource is located; and
determining the first time location where the second PDSCH resource is located based on the second information.

In an embodiment, the processor is further used for performing the operations of:
receiving third information; and
terminating the corresponding PDSCH data reception through the second PDSCH resource based on the third information.

It should be noted here that the above-mentioned terminal according to the embodiments of the present application may implement all the method steps implemented by the above-mentioned method embodiments applied to the terminal, and may achieve the same effect. The same parts and beneficial effects as the same method embodiments are not repeated in the present application.

FIG. 7 is a schematic structural diagram of a network side device according to an embodiment of the present application. As shown in FIG. 7, the network side device includes a memory 720, a transceiver 700 and a processor 710,
where the memory 720 is used for storing a computer program, the transceiver 700 is used for transmitting and receiving data under control of the processor 710, and the processor 710 is used for reading the computer program stored in the memory 720 and performing the following operation of:
transmitting first information carried by media access control (MAC) layer information carried in a first physical downlink shared channel (PDSCH) resource, where the first information is used to indicate a terminal to perform corresponding PDSCH data reception through a second PDSCH resource.

In an embodiment, the transceiver 700 is used for transmitting and receiving data under control of the processor 710.

In FIG. 7, a bus architecture may include any number of interconnected buses and bridges, which are linked together through various circuits of one or more processors represented by processor 710 and one or more memories represented by the memory 720. The bus architecture may also link together various other circuits, such as peripherals, voltage regulators, and power management circuits. The bus interface provides an interface. Transceiver 700 may be multiple elements, i.e., including a transmitter and a receiver, units for providing communication with various other devices over transmission media including wireless channels, wired channels, fiber optic cables, and the like. The processor 710 is responsible for managing the bus architecture and general processing, and the memory 720 may store data used by the processor 710 when performing operations.

The processor 710 may be a central processing unit (CPU), an application specific integrated circuit (ASIC), a field-programmable gate array (FPGA), or a complex programmable logic device (CPLD), the processor may also use a multi-core architecture.

In an embodiment, transmitting the first information carried by the MAC layer information carried in the first PDSCH resource includes:
reusing time-frequency resource allocation information of a slot where a PDSCH is configured, where resource allocation information of the second PDSCH resource carried by the MAC layer information is slot information; or
performing difference indication, based on configured parameters of a PDSCH, of a parameter subset.

In an embodiment, the processor is further used for performing the operations of:
transmitting second information, where the second information is used to indicate a first time location where the second PDSCH resource is located.

In an embodiment, the processor is further used for performing the operations of:
transmitting third information, where the third information is used to indicate the terminal to terminate the corresponding PDSCH data reception through the second PDSCH resource.

The above-mentioned network side device according to the embodiments of the present application may implement all the method steps implemented by the above-mentioned method embodiments applied to the network side device, and may achieve the same effect. The same parts and beneficial effects as the same method embodiments are not repeated in the present application.

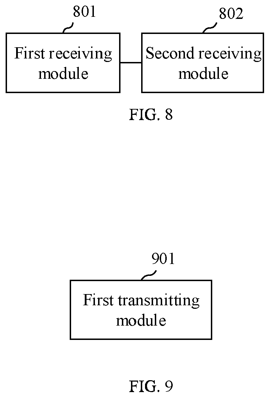

FIG. 8 is a first schematic structural diagram of a dynamic data transmission apparatus according to an embodiment of the present application. As shown in FIG. 8, an embodiment of the present application provides a dynamic data transmission apparatus, including a first receiving module 801 and a second receiving module 802, where
the first receiving module 801 is used for receiving first information carried by media access control (MAC) layer information carried in a first physical downlink shared channel (PDSCH) resource, where the first information is used to indicate a terminal to perform corresponding PDSCH data reception through a second PDSCH resource; and
the second receiving module 802 is used for performing corresponding PDSCH data reception through the second PDSCH resource based on the first information.

In an embodiment, the first information is resource allocation information of the second PDSCH resource.

In an embodiment, the resource allocation information is a subset or a full set of PDSCH resource allocation information.

In an embodiment, the resource allocation information at least includes one or more of the following information:
frequency domain resource allocation (FDRA) information;
time domain resource allocation (TDRA) information;
a modulation and coding scheme (MCS) level;
a new data indicator (NDI);
a redundancy version (RV);
hybrid automatic repeat reQuest (HARQ) associated information; or
an antenna port.

In an embodiment, the resource allocation information is carried in an additional information field in the MAC layer information.

In an embodiment, the first information is resource allocation indication information of the second PDSCH resource.

In an embodiment, the resource allocation indication information at least includes one or more of the following information:
a resource allocation information field indicator; or
a modification indicator of a resource allocation information field.

In an embodiment, the first PDSCH resource is a semi-persistent scheduling (SPS) PDSCH resource, a PDSCH resource scheduled by downlink control information (DCI), or a lastly scheduled second PDSCH resource.

In an embodiment, the apparatus further includes a first determining module,
where the first determining module is used for determining a first time location where the second PDSCH resource is located.

In an embodiment, the first time location is a slot or a time duration of a time window.

In an embodiment, the first time location is carried by one or more of the following information:
physical layer information;
MAC layer information; or
higher layer information.

In an embodiment, the physical layer information includes DCI information indicating the first PDSCH resource; and/or
the MAC layer information includes MAC layer information carrying the first information.

In an embodiment, the first determining module includes a first receiving sub-module and a first determining sub-module,
where the first receiving sub-module is used for receiving second information, where the second information is used to indicate the first time location where the second PDSCH resource is located; and
the first determining sub-module is used for determining the first time location where the second PDSCH resource is located based on the second information.

In an embodiment, the apparatus further includes a third receiving module and a terminating module,
where the third receiving module is used for receiving third information; and
the terminating module is used for terminating the corresponding PDSCH data reception through the second PDSCH resource based on the third information.

In an embodiment, the above-mentioned dynamic data transmission apparatus according to the embodiments of the present application may implement all the method steps implemented by the above-mentioned method embodiments applied to the terminal, and may achieve the same effect. The same parts and beneficial effects as the same method embodiments are not repeated in the present application.

FIG. 9 is a second schematic structural diagram of a dynamic data transmission apparatus according to an embodiment of the present application. As shown in FIG. 9, an embodiment of the present application provides a dynamic data transmission apparatus, including a first transmitting module 901, where
the first transmitting module 901 is used for transmitting first information carried by media access control (MAC) layer information carried in a first physical downlink shared channel (PDSCH) resource, where the first information is used to indicate a terminal to perform corresponding PDSCH data reception through a second PDSCH resource.

In an embodiment, the first transmitting module is specifically used for:
reusing time-frequency resource allocation information of a slot where a PDSCH is configured, where resource allocation information of the second PDSCH resource carried by the MAC layer information is slot information; or
performing difference indication, based on configured parameters of a PDSCH, of a parameter subset.

In an embodiment, the apparatus further includes a second transmitting module,
where the second transmitting module is used for transmitting second information, where the second information is used to indicate the first time location where the second PDSCH resource is located.

In an embodiment, the apparatus further includes a third transmitting module,
where the third transmitting module is used for transmitting third information, where the third information is used to indicate the terminal to terminate the corresponding PDSCH data reception through the second PDSCH resource.

In an embodiment, the above-mentioned dynamic data transmission apparatus according to the embodiments of the present application may implement all the method steps implemented by the above-mentioned method embodiments applied to the network side device, and may achieve the same effect. The same parts and beneficial effects as the same method embodiments are not repeated in the present application.

It should be noted that, the division of units/modules in the embodiments of the present application is schematic, and is only a logical function division, and there may be other division manners in actual implementation. In addition, the functional units in the various embodiments of the present application may be integrated into one processing unit, or each unit may exist alone physically, or two or more units may be integrated into one unit. The above-mentioned integrated unit may be implemented in the form of hardware or software functional unit.

If the integrated unit is implemented in the form of a software functional unit and sold or used as an independent product, it may be stored in a processor readable storage medium. Based on such understanding, the technical solutions of the present application in essence or a part of the technical solutions that contributes to the related art, or all or part of the technical solutions, may be embodied in the form of a software product, which is stored in a storage medium, including several instructions to cause a computer device (which may be a personal computer, server, or network device, etc.) or a processor to perform all or part of the steps of the methods described in the respective embodiments of the present application. The storage medium described above includes various media that may store program codes such as U disk, mobile hard disk, read-only memory (ROM), random access memory (RAM), magnetic disk, or optical disk.

An embodiment of the present application further provides a processor-readable storage medium storing a computer program that, when executed by a processor, causes the processor to perform the steps of the methods described above, including:
receiving first information carried by media access control (MAC) layer information carried in a first physical downlink shared channel (PDSCH) resource, where the first information is used to indicate a terminal to perform corresponding PDSCH data reception through a second PDSCH resource; and performing corresponding PDSCH data reception through the second PDSCH resource based on the first information; or, including:
transmitting first information carried by media access control (MAC) layer information carried in a first physical downlink shared channel (PDSCH) resource, where the first information is used to indicate a terminal to perform corresponding PDSCH data reception through a second PDSCH resource.

It should be noted that the processor-readable storage medium may be any available medium or data storage device that may be accessed by the processor, including but not limited to, a magnetic storage (e.g., a floppy disk, a hard disk, a magnetic tape, a magneto-optical disk (MO), etc.), optical memory (such as CD, DVD, BD, HVD, etc.), and a semiconductor memory (such as ROM, EPROM, EEPROM, non-volatile memory (NAND FLASH), solid-state drive (SSD)), etc.

In should be noted that terms "first", "second", etc., are used to distinguish similar objects and are not used to describe a particular order or sequence. It should be noted that these terms are interchangeable under appropriate circumstances so that embodiments of the present application may be practiced in sequences other than those illustrated or described herein, and the objects distinguished by "first" and "second" have the same type, and the number of the objects is not limited. For example, the first object may be one or multiple.

In the embodiments of the present application, the term "and/or" describes a related relationship of associated objects, and indicates that there may be three kinds of relationships. For example, A and/or B may represent that A exists alone, A and B exist simultaneously, and B exists alone. Character "/" generally indicates that the associated objects have an "or" relationship.

In the embodiments of the present application, the term "multiple" refers to two or more than two, and other quantifiers are similar.

The solutions according to the embodiments of the present application may be applicable to various systems, especially 5G systems. For example, applicable systems may be a global system of mobile communication (GSM) system, a code division multiple access (CDMA) system, a wideband code division multiple access (WCDMA) general packet radio service (GPRS) system, a long term evolution (LTE) system, a LTE frequency division duplex (FDD) system, a LTE time division duplex (TDD) system, a long term evolution advanced (LTE-A) system, a universal mobile telecommunication system (UMTS), a worldwide interoperability for microwave access (WiMAX) system, a 5G new radio (NR) system, etc. These various systems include a user equipment and a network side device. The system may also include a core network part, such as an evolved packet system (EPS), a 5G system (5GS), and the like.

The terminal device in the embodiments of the present application may be a device that provides voice and/or data connectivity to a user, a handheld device with a radio connection function, or other processing device connected to a radio modem. In different systems, the names of the terminal device may be different. For example, in the 5G system, the terminal device may be called as user equipment (UE). A radio terminal device may communicate with one or more core networks (CN) via a radio access network (RAN), and the radio terminal device may be a mobile terminal device, such as a mobile phone (or cellular phone) and computers with mobile terminal device, e.g., a portable mobile device, a pocket-sized mobile device, a hand-held mobile device, a computer-built mobile device or a vehicle-mounted mobile device, which exchange language and/or data with the radio access network. For example, a personal communication service (PCS) phone, a radio phone, a session initiated protocol (SIP) phone, a wireless local loop (WLL) station, a personal digital assistant (PDA) and other devices. A radio terminal device may also be called a system, a subscriber unit, a subscriber station, a mobile station, a mobile, a remote station, an access point, a remote terminal, an access terminal, a user terminal, a user agent, and a user device, which are not limited in the embodiments of the present application.

The network side device in the embodiments of the present application may be a base station, and the base station may include multiple cells providing services for the terminal. Depending on the specific application, the network side device may also be called an access point, or may be a device in the access network that communicates with radio terminal device through one or more sectors on the air interface, or other names. Network device may be used to exchange received air frames with internet protocol (IP) packets, and act as a router between radio terminal and the rest of the access network, and the rest of the access network may include an IP communication network. The network side device may also coordinate attribute management for the air interface. For example, the network device in the embodiments of the present application may be a base transceiver station (BTS) in a global system for mobile communications (GSM) or a code division multiple access (CDMA), may also be a node B in a wide-band code division multiple access (WCDMA), may also be an evolutional node B (eNB or e-Node B) in a long term evolution (LTE) system, a 5G base station (gNB) in 5G network architecture (next generation system), may also be a Home evolved Node B (HeNB), a relay node (relay node), a femto, a pico base station (pico), etc., which are not limited in the embodiments of the present application. In some network structures, a network device may include a centralized unit (CU) node and a distributed unit (DU) node, and the centralized unit and the distributed unit may also be geographically separated.

Multi-input multi-output (MIMO) transmission may be performed between the network device and the terminal using one or more antennas and the MIMO transmission may be single user MIMO (SU-MIMO) or multiple user MIMO (MU-MIMO). According to the form and number of antenna combinations, MIMO transmission may be 2D-MIMO, 3D-MIMO, FD-MIMO, or massive-MIMO, and may also be diversity transmission, precoding transmission, or beamforming transmission.

As will be appreciated by those skilled in the art, embodiments of the present application may be provided as a method, system, or computer program product. Accordingly, the present application may take the form of an entirely hardware embodiment, an entirely software embodiment, or an embodiment combining software and hardware aspects. Furthermore, the present application may take the form of a computer program product embodied on one or more computer-usable storage media having computer-usable program code embodied therein, including but not limited to disk storage, optical storage, and the like.

The present application is described with reference to flow charts and/or block diagrams of methods, apparatus (systems), and computer program products according to embodiments of the present application. It will be understood that each flow and/or block in the flow charts and/or block diagrams, and combinations thereof may be implemented by computer-executable instructions. These computer-executable instructions may be provided to processors of a general purpose computer, a special purpose computer, an embedded processor or other programmable data processing device to produce a machine and the instructions executed by the processor of the computer or other programmable data processing device form a means for performing the functions specified in one or more flows in a flowchart and/or one or more blocks of a block diagram.

These processor-executable instructions may also be stored in a processor-readable memory capable of directing a computer or other programmable data processing apparatus to operate in a particular manner, and the instructions stored in the processor-readable memory may result in a manufacture including instruction means, the instruction means may perform the functions specified in one or more flows of the flowchart and/or one or more blocks of the block diagram.

These processor-executable instructions may also be loaded onto a computer or other programmable data processing device to cause a series of operational steps to be performed on the computer or other programmable device to produce a computer-implemented process and instructions performed on the computer or other programmable devices provide steps for performing the functions specified in one or more flows of the flowchart and/or one or more blocks of the block diagram.

It will be apparent to those skilled in the art that various modifications and variations may be made to the present application without departing from the scope of the present application. Thus, provided that these modifications and variations of the present application fall within the scope of the claims of the present application and their equivalents, the present application is also intended to cover such modifications and variations.

## Claims

1. A dynamic data transmission method, comprising:
receiving first information carried by media access control, MAC, layer information carried in a first physical downlink shared channel, PDSCH, resource, wherein the first information is used to indicate a terminal to perform corresponding PDSCH data reception through a second PDSCH resource; and
performing corresponding PDSCH data reception through the second PDSCH resource based on the first information.

2. The method of claim 1, wherein the first information is resource allocation information of the second PDSCH resource.

3. The method of claim 2, wherein the resource allocation information is a subset or a full set of PDSCH resource allocation information.

4. The method of claim 3, wherein the resource allocation information at least comprises one or more of the following information:
frequency domain resource allocation, FDRA, information;
time domain resource allocation, TDRA, information;
a modulation and coding scheme, MCS, level;
new data indicator, NDI;
redundancy version, RV;
hybrid automatic repeat reQuest, HARQ, associated information; or
an antenna port.

5. The method of claim 3, wherein the resource allocation information is carried in an additional information field in the MAC layer information.

6. The method of claim 1, wherein the first information is resource allocation indication information of the second PDSCH resource.

7. The method of claim 6, wherein the resource allocation indication information at least comprises one or more of the following information:
a resource allocation information field indicator; or
a modification indicator of a resource allocation information field.

8. The method of claim 1, wherein the first PDSCH resource is a semi-persistent scheduling, SPS, PDSCH resource, a PDSCH resource scheduled by downlink control information, DCI, or a lastly scheduled second PDSCH resource.

9. The method of claim 1, further comprising:
determining a first time location where the second PDSCH resource is located.

10. The method of claim 9, wherein the first time location is a slot or a time duration of a time window.

11. The method of claim 9, wherein the first time location is carried by one or more of the following information:
physical layer information;
MAC layer information; or
higher layer information.

12. The method of claim 11, wherein the physical layer information comprises DCI information indicating the first PDSCH resource; and/or
the MAC layer information comprises MAC layer information carrying the first information.

13. The method of claim 9, wherein determining the first time location of the second PDSCH resource comprises:
receiving second information, wherein the second information is used to indicate the first time location where the second PDSCH resource is located; and
determining the first time location where the second PDSCH resource is located based on the second information.

14. The method of any one of claims 1 to 13, further comprising:
receiving third information; and
terminating the corresponding PDSCH data reception through the second PDSCH resource based on the third information.

15. A dynamic data transmission method, comprising:
transmitting first information carried by media access control, MAC, layer information carried in a first physical downlink shared channel, PDSCH, resource, wherein the first information is used to indicate a terminal to perform corresponding PDSCH data reception through a second PDSCH resource.

16. The method of claim 15, wherein transmitting the first information carried by the MAC layer information carried in the first PDSCH resource comprises:
reusing time-frequency resource allocation information of a slot where a PDSCH is configured, wherein resource allocation information of the second PDSCH resource carried by the MAC layer information is slot information; or,
performing difference indication, based on configured parameters of a PDSCH, of a parameter subset.

17. The method of claim 15, further comprising:
transmitting second information, wherein the second information is used to indicate a first time location where the second PDSCH resource is located.

18. The method of claim 15, further comprising:
transmitting third information, wherein the third information is used to indicate the terminal to terminate the corresponding PDSCH data reception through the second PDSCH resource.

19. A terminal, comprising a memory, a transceiver and a processor,
wherein the memory is used for storing a computer program, the transceiver is used for transmitting and receiving data under control of the processor, and the processor is used for reading the computer program stored in the memory and performing the following operations of:
receiving first information carried by media access control, MAC, layer information carried in a first physical downlink shared channel, PDSCH, resource, wherein the first information is used to indicate a terminal to perform corresponding PDSCH data reception through a second PDSCH resource; and
performing corresponding PDSCH data reception through the second PDSCH resource based on the first information.

20. The terminal of claim 19, wherein the first information is resource allocation information of the second PDSCH resource.

21. The terminal of claim 20, wherein the resource allocation information is a subset or a full set of PDSCH resource allocation information.

22. The terminal of claim 21, wherein the resource allocation information at least comprises one or more of the following information:
frequency domain resource allocation, FDRA, information;
time domain resource allocation, TDRA, information;
a modulation and coding scheme, MCS, level;
a new data indicator, NDI;
a redundancy version, RV;
hybrid automatic repeat reQuest, HARQ, associated information; or
an antenna port.

23. The terminal of claim 22, wherein the resource allocation information is carried in an additional information field in the MAC layer information.

24. The terminal of claim 19, wherein the first information is resource allocation indication information of the second PDSCH resource.

25. The terminal of claim 24, wherein the resource allocation indication information at least comprises one or more of the following information:
a resource allocation information field indicator; or
a modification indicator of a resource allocation information field.

26. The terminal of claim 19, wherein the first PDSCH resource is a semi-persistent scheduling, SPS, PDSCH resource, a PDSCH resource scheduled by downlink control information, DCI, or a lastly scheduled second PDSCH resource.

27. The terminal of claim 19, wherein the processor is further used for performing the following operation of:
determining a first time location where the second PDSCH resource is located.

28. The terminal of claim 27, wherein the first time location is a slot or a time duration of a time window.

29. The terminal of claim 27, wherein the first time location is carried by one or more of the following information:
physical layer information;
MAC layer information; or
higher layer information.

30. The terminal of claim 29, wherein the physical layer information comprises DCI information indicating the first PDSCH resource; and/or
the MAC layer information comprises MAC layer information carrying the first information.

31. The terminal of claim 27, wherein determining the first time location of the second PDSCH resource comprises:
receiving second information, wherein the second information is used to indicate the first time location where the second PDSCH resource is located; and
determining the first time location where the second PDSCH resource is located based on the second information.

32. The terminal of any one of claims 19 to 31, wherein the processor is further used for performing the following operations of
receiving third information; and
terminating the corresponding PDSCH data reception through the second PDSCH resource based on the third information.

33. A network side device, comprising a memory, a transceiver and a processor,
wherein the memory is used for storing a computer program, the transceiver is used for transmitting and receiving data under control of the processor, and the processor is used for reading the computer program stored in the memory and performing the following operation of
transmitting first information carried by media access control, MAC, layer information carried in a first physical downlink shared channel, PDSCH, resource, wherein the first information is used to indicate a terminal to perform corresponding PDSCH data reception through a second PDSCH resource.

34. The network side device of claim 33, wherein transmitting the first information carried by the MAC layer information carried in the first PDSCH resource comprises:
reusing time-frequency resource allocation information of a slot where a PDSCH is configured, wherein resource allocation information of the second PDSCH resource carried by the MAC layer information is slot information; or,
performing difference indication, based on configured parameters of a PDSCH, of a parameter subset.

35. The network side device of claim 33, wherein the processor is further used for performing the following operations of:
transmitting second information, wherein the second information is used to indicate a first time location where the second PDSCH resource is located.

36. The network side device of claim 33, wherein the processor is further used for performing the following operations of:
transmitting third information, wherein the third information is used to indicate the terminal to terminate the corresponding PDSCH data reception through the second PDSCH resource.

37. A dynamic data transmission apparatus, comprising:
a first receiving module, used for receiving first information carried by media access control, MAC, layer information carried in a first physical downlink shared channel, PDSCH, resource, wherein the first information is used to indicate a terminal to perform corresponding PDSCH data reception through a second PDSCH resource; and
a second receiving module, used for performing corresponding PDSCH data reception through the second PDSCH resource based on the first information.

38. The apparatus of claim 37, wherein the first information is resource allocation information of the second PDSCH resource.

39. The apparatus of claim 38, wherein the resource allocation information is a subset or a full set of PDSCH resource allocation information.

40. The apparatus of claim 39, wherein the resource allocation information at least comprises one or more of the following information:
frequency domain resource allocation, FDRA, information;
time domain resource allocation, TDRA, information;
a modulation and coding scheme, MCS, level;
a new data indicator, NDI;
a redundancy version, RV;
hybrid automatic repeat reQuest, HARQ, associated information; or
an antenna port.

41. The apparatus of claim 39, wherein the resource allocation information is carried in an additional information field in the MAC layer information.

42. The apparatus of claim 37, wherein the first information is resource allocation indication information of the second PDSCH resource.

43. The apparatus of claim 42, wherein the resource allocation indication information at least comprises one or more of the following information:
a resource allocation information field indicator; or
a modification indicator of a resource allocation information field.

44. The apparatus of claim 43, wherein the first PDSCH resource is a semi-persistent scheduling, SPS, PDSCH resource, a PDSCH resource scheduled by downlink control information, DCI, or a lastly scheduled second PDSCH resource.

45. The apparatus of claim 37, further comprising a first determining module,
wherein the first determining module is used for determining a first time location where the second PDSCH resource is located.

46. The apparatus of claim 45, wherein the first time location is a slot or a time duration of a time window.

47. The apparatus of claim 45, wherein the first time location is carried by one or more of the following information:
physical layer information;
MAC layer information; or
higher layer information.

48. The apparatus of claim 47, wherein the physical layer information comprises DCI information indicating the first PDSCH resource; and/or
the MAC layer information comprises MAC layer information carrying the first information.

49. The apparatus of claim 45, wherein the first determining module comprises a first receiving sub-module and a first determining sub-module,
wherein the first receiving sub-module is used for receiving second information, wherein the second information is used to indicate the first time location where the second PDSCH resource is located; and
the first determining sub-module is used for determining the first time location where the second PDSCH resource is located based on the second information.

50. The apparatus of any one of claims 37 to 49, further comprising a third receiving module and a terminating module,
wherein the third receiving module is used for receiving third information; and
the terminating module is used for terminating the corresponding PDSCH data reception through the second PDSCH resource based on the third information.

51. A dynamic data transmission apparatus, comprising:
a first transmitting module, used for transmitting first information carried by media access control, MAC, layer information carried in a first physical downlink shared channel, PDSCH, resource, wherein the first information is used to indicate a terminal to perform corresponding PDSCH data reception through a second PDSCH resource.

52. The apparatus of claim 51, wherein the first transmitting module is used for:
reusing time-frequency resource allocation information of a slot where a PDSCH is configured, wherein resource allocation information of the second PDSCH resource carried by the MAC layer information is slot information; or,
performing difference indication, based on configured parameters of a PDSCH, of a parameter subset.

53. The apparatus of claim 51, further comprising a second transmitting module,
wherein the second transmitting module is used for transmitting second information, wherein the second information is used to indicate the first time location where the second PDSCH resource is located.

54. The apparatus of claim 51, further comprising a third transmitting module,
wherein the third transmitting module is used for transmitting third information, wherein the third information is used to indicate the terminal to terminate the corresponding PDSCH data reception through the second PDSCH resource.

55. A processor-readable storage medium storing a computer program that, when executed by a processor, causes the processor to perform the dynamic data transmission method of any one of claims 1 to 18.
